# EUROPEAN PATENT APPLICATION

(11) **EP 4 507 101 A1**
(43) Date of publication of application: **12.02.2025**
(21) Application number: 24798204.4
(22) Date of filing: 08.07.2024
(51) Int. Cl.: H01M 50/342

(54) **BATTERY CELL AND BATTERY PACK**

(30) Priority: 12.07.2023 CN 202310858436; 12.07.2023 CN 202321839763 U; 12.07.2023 CN 202321831926 U
(71) Applicant: Eve Energy Co., Ltd, Huizhou, Guangdong 516006 (CN)
(72) Inventor: HUANG, Liliang, Huizhou, Guangdong 516006 (CN)
(74) Representative: HGF
(86) International application number: PCT/CN2024/104128
(87) International publication number: WO 2024/245455

(57) **Abstract**

A battery cell (1) and a battery pack are provided. The battery cell (1) includes a housing (11) and a blocking member (13). The housing (11) has a first accommodating chamber with an opening at one end, and the blocking member (13) is an insulating member that is deformable at high temperature. The blocking member (13) is connected to the housing (11) and blocks the opening. A protrusion (133) is provided on a side of the blocking member (13) away from the housing (11), and the protrusion (133) is configured to break through a weak region (211) on a pressure relief passage (23). The battery pack includes the battery cell (1) described above, and when the battery cell (1) has thermal runaway, the blocking member (13) is heated to melt and deform and separate from the housing (11) to release the pressure inside the battery cell (1).

## Description

This application claims the priority of a Chinese Patent Application filed with the National Intellectual Property Administration (CNIPA) on July 12, 2023, with application No. 202310858436.3, the priority of a Chinese Patent Application filed with the National Intellectual Property Administration (CNIPA) on July 12, 2023, with application No. 202321839763.6, and the priority of a Chinese Patent Application filed with the National Intellectual Property Administration (CNIPA) on July 12, 2023, with application No. 202321831926.6, and all the disclosures of the above applications are incorporated herein by reference in their entirety.

### TECHNICAL FIELD

The present application relates to the technical field of power storage equipment, and specifically to a battery cell and a battery pack.

### BACKGROUND

In order to prevent the explosion of the battery cell in the state of thermal runaway, the battery cell is usually provided with an explosion-proof valve. When the internal pressure of the battery cell reaches a certain level, the gas inside the battery cell will break through the explosion-proof valve to release pressure, thereby preventing the battery cell from exploding, and the gas ejected from the battery cell will enter the pressure relief passage of the battery pack for pressure relief.

### SUMMARY

### Technical Problem

In the related art, when the explosion-proof valve is broken, a part of the conductive material inside the battery cell will be ejected with the gas. If this part of the conductive material is sprayed onto the explosion-proof valves of other battery cells through the pressure relief passage (the explosion-proof valve is negatively charged), it is apt to cause the battery pack to short-circuit and explode.

### Technical Solution

In a first aspect, a battery cell is provided according to embodiments of the present application, which includes a housing and also a blocking member. The housing has a first accommodating chamber with an opening at one end, the blocking member is an insulating member that is deformable at high temperature, the blocking member is connected to the housing and blocks the opening, and the blocking member is provided with a protrusion on its side away from the housing, and the protrusion is arranged to break through a weak region on a pressure relief passage.

In a second aspect, a battery pack is provided according to embodiments of the present application, which includes a tray and the battery cell described above. A pressure relief passage is provided inside the tray, and a weak region is provided on a side wall of the pressure relief passage, the tray is located below the battery cell and supports the battery cell, and the protrusion of the battery cell is directly opposite to the weak region.

### Beneficial Effect

In the battery cell provided by the embodiment of the present application, by setting the blocking member as an insulating member that is deformable at high temperature, when the battery cell has thermal runaway, the blocking member melts and deforms after being heated, and the airflow in the housing impacts the blocking member, so that the blocking member is separated from the housing, and the opening of the housing is opened to release the pressure inside the battery cell. Since the blocking member is an insulating member, when the airflow in the battery cell breaks through the blocking member to release pressure, the conductive material follows the airflow through the pressure relief passage and is sprayed onto other battery cells. The insulating blocking member of any other battery cell separates and insulates the sprayed conductive material from the jelly roll inside it, preventing the other battery cell from being affected and short-circuited. Moreover, when the blocking member is separated from the housing, arcing between the insulating blocking member and the housing is avoided, thereby improving the safety factor of the battery cell in the thermal runaway state. Furthermore, when the battery cell has thermal runaway, the gas inside the first accommodating chamber of the housing expands, the blocking member is compressed to squeeze the weak region of the side wall of the pressure relief passage, and the protrusion assists in breaking through the weak region1, so that the airflow ejected from the battery cell flows smoothly into the pressure relief passage, thereby improving the pressure relief effect and preventing the airflow ejected from the battery cell from gathering inside the battery pack.

### BRIEF DESCRIPTION OF THE DRAWINGS

FIG. 1 is a schematic structural diagram of a battery cell according to an embodiment of the present application;
FIG. 2 is a partial cross-sectional view of the battery cell and a tray according to an embodiment of the present application;
FIG. 3 is a partial cross-sectional view of the battery cell and a partition plate according to an embodiment of the present application;
FIG. 4 is a schematic structural diagram of a battery pack according to an embodiment of the present application; and
FIG. 5 is a schematic structural diagram of the battery pack in an exploded view according to an embodiment of the present application.

### Reference numeral list:

1. battery cell
11. housing
12. jelly roll
13. blocking member
131. sealing cover plate
1311. central plate
1312. first annular plate
1313. second annular plate
132. surrounding wall
133. protrusion
134. first boss
135. second boss
14. collector plate
2. tray
21. partition plate
211. weak region
212. positioning slot
213. explosion-proof valve
2131. notch
2132. third boss
22. bottom plate
23. pressure relief passage
3. CCS assembly
4. cooling pipe
5. second accommodating chamber

### DETAILED DESCRIPTION

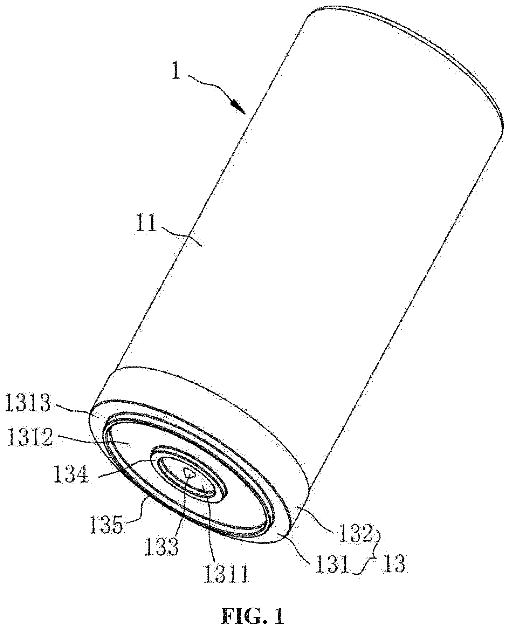

As shown in FIG. 1 to FIG. 3, a battery cell 1 is proposed in this embodiment, which is arranged in a battery pack and adjacent to a pressure relief passage 23 in the battery pack. The battery cell 1 includes a housing 11, a jelly roll 12 and a blocking member 13. The housing 11 has a first accommodating chamber with an opening at one end, and the jelly roll 12 is installed in the first accommodating chamber. The blocking member 13 is an insulating member that is deformable at high temperature. The blocking member 13 is connected to the housing 11 and blocks the opening. A protrusion 133 is provided on a side of the blocking member 13 away from the housing 11. The protrusion 133 is arranged to break through a weak region 211 on a side wall of the pressure relief passage 23. It should be noted that the high temperature at which the blocking member 13 deforms refers to the temperature after the battery cell 1 has thermal runaway, that is, the battery cell 1 heats up after thermal runaway occurs, and at this time, the blocking member 13 is deformed by heat.

By setting the blocking member 13 as an insulating member that is deformable at high temperature, when the battery cell 1 has thermal runaway, the blocking member 13 melts and deforms after being heated, and the airflow in the housing 11 impacts the blocking member 13, so that the blocking member 13 is separated from the housing 11, and the opening of the housing 11 is opened to release the pressure inside the battery cell 1. Since the blocking member 13 is an insulating member, when the airflow in the battery cell 1 breaks through the blocking member 13 to release pressure, the conductive material follows the airflow through the pressure relief passage 23 and is sprayed onto other battery cells 1. The insulating blocking member 13 of any other battery cell 1 separates and insulates the sprayed conductive material from the jelly roll 12 inside it, preventing the other battery cell 1 from being affected and short-circuited. Moreover, when the blocking member 13 is separated from the housing 11, arcing between the insulating blocking member 13 and the housing 11 is avoided, thereby improving the safety factor of the battery cell 1 in the thermal runaway state. Furthermore, when the battery cell 1 has thermal runaway, the gas inside the first accommodating chamber of the housing 11 expands, and the blocking member 13 is compressed to squeeze the weak region 211 of the side wall of the pressure relief passage 23, and the protrusion 133 assists in breaking through the weak region 211, so that the airflow ejected from the battery cell 1 flows smoothly into the pressure relief passage 23, thereby improving the pressure relief effect and preventing the airflow ejected from the battery cell 1 from gathering inside the battery pack.

In some embodiments, the material of the protrusion 133 is consistent with the material of the blocking member 13, and the protrusion 133 and the blocking member 13 are integrally formed, so that the melting point of the protrusion 133 is consistent with the melting point of the blocking member 13, which facilitates the integral forming of the protrusion 133 and the blocking member 13, and reduces the processing difficulty of the battery cell 1. In other embodiments, the material of the protrusion 133 is different from the material of the blocking member 13, and the melting point of the protrusion 133 is higher than the melting point of the blocking member 13, so as to avoid affecting the hardness of the protrusion 133 after the thermal runaway of the battery cell 1 occurs, so that the protrusion 133 with a higher melting point can maintain sufficient strength to break through the weak region 211 for pressure relief.

In this embodiment, the protrusion 133 and the blocking member 13 are integrally formed, and the melting point of the protrusion 133 is consistent with the melting point of the blocking member 13. Exemplarily, the materials of the protrusion 133 and the blocking member 13 may be polycarbonate (PC), polyethylene glycol terephthalate (PET), acrylonitrile butadiene styrene (ABS), PC+ABS, polypropylene (PP), etc. It is understandable that when the blocking member 13 is heated, due to the large thickness of the protrusion 133, the heating rate of the protrusion 133 is lower than the heating rate of other parts of the blocking member 13 in a short time, that is, the temperature of the protrusion 133 is lower than the temperature of other parts of the blocking member 13. At this time, the protrusion 133 can maintain its original strength so as to break through the weak region 211 of the side wall of the pressure relief passage 23.

In this embodiment, the housing 11 is a metal part, the housing 11 is negatively charged, and the material of the blocking member 13 is plastic cement. In other embodiments, the blocking member 13 may also be made of other composite materials, and it is only necessary to ensure that the blocking member 13 is insulated from the housing 11.

As shown in FIG. 1, the blocking member 13 includes a sealing cover plate 131 and a surrounding wall 132, the surrounding wall 132 and the protrusion 133 are located on two sides of the sealing cover plate 131 respectively, and the surrounding wall 132 is sleeved on an outer circumference of the housing 11. An inner side surface of the surrounding wall 132 is connected to an outer surface of the housing 11, and the inner side surface of the surrounding wall 132 is bonded to the outer surface of the housing 11 with high-temperature resistant glue. Apparently, the connection between the surrounding wall 132 and the housing 11 can also be achieved by other connection methods. For example, snap-on connection, sealing ring connection, etc. are used, which are not limited here. The surrounding wall 132 increases the area of connection between the blocking member 13 and the housing 11, thereby improving the strength of connection between the two, so that the first accommodating chamber and the outside of the housing 11 remain isolated under normal conditions, so that the battery cell 1 can perform normal power charging, storing and discharging operations. In addition, the surrounding wall 132 is sleeved on the housing 11, which not only reduces the occupation of the first accommodating chamber by the blocking member 13, but also avoids the surrounding wall 132 from squeezing the jelly roll 12 inside the housing 11, and also reduces the difficulty of installing the blocking member 13 and the housing 11. In other embodiments, the surrounding wall 132 can also be inserted into the first accommodating chamber so that an outer circumferential side surface of the surrounding wall 132 is fixed to an inner side surface of the housing 11.

As shown in FIG. 1, the protrusion 133 is spike-shaped. Setting the protrusion 133 in the shape of a spike can reduce the area of contact between the protrusion 133 and the weak region 211, increase the intensity of pressure applied by the protrusion 133 to the weak region 211, thereby reducing the difficulty of the protrusion 133 piercing the weak region 211, so that the airflow ejected from the inside of the housing 11 during thermal runaway can smoothly enter the pressure relief passage 23.

The protrusion 133 is located at the center of the sealing cover plate 131 of the blocking member 13. The outer circumference of the blocking member 13 is connected to the housing 11, therefore, when the battery cell 1 expands, the sealing cover plate 131 will deform (even if the temperature is not high, the sealing cover plate 131 will deform under the influence of air pressure). The center of the sealing cover plate 131 is the region with the largest deformation. When the sealing cover plate 131 is deformed at high temperature, the protrusion 133 arranged at the center of the sealing cover plate 131 moves the longest distance toward the weak region 211, which helps the protrusion 133 to quickly pierce the weak region 211, thereby assisting in pressure relief.

As shown in FIG. 1, a first boss 134 is provided on the side of the blocking member 13 away from the housing 11. The first boss 134 is annular. The protrusion 133 is located in an annular region of the first boss 134, and an end face of the first boss 134 abuts against the weak region 211. By setting the first boss 134, the protrusion 133 can be assisted to break through the weak region 211, so that the battery cell 1 can be depressurized smoothly.

Referring to FIG. 1 to FIG. 3, the sealing cover plate 131 of the blocking member 13 includes a central plate 1311, a first annular plate 1312 and a second annular plate 1313. The central plate 1311 is located within an annular region of the first annular plate 1312, and a circumferential side surface of the central plate 1311 is connected to an inner side surface of the first annular plate 1312. The first annular plate 1312 is located within an annular region of the second annular plate 1313, and an outer circumferential side surface of the first annular plate 1312 is connected to an inner side surface of the second annular plate 1313. The first boss 134 and the protrusion 133 are both arranged on the central plate 1311, the second annular plate 1313 abuts against the weak region 211, and the first annular plate 1312 is spaced from the weak region 211. When the battery cell 1 has thermal runaway, the high temperature will cause the first annular plate 1312 to melt and deform. Under the impact of the pressure relief airflow, the first annular plate 1312 will break, so that the central plate 1311 can be driven by the pressure relief airflow to move toward one side of the pressure relief passage 23, thereby allowing the protrusion 133 and the first boss 134 to break through the weak region 211 on the pressure relief passage 23, so that the pressure relief airflow can enter the pressure relief passage 23 to complete the pressure relief.

In this embodiment, the central plate 1311, the first annular plate 1312, the second annular plate 1313, the protrusion 133, the first boss 134 and the surrounding wall 132 are integrally formed, and the thickness of the first annular plate 1312, the thickness of the second annular plate 1313 and the thickness of the central plate 1311 are equal. It can be understood that the second annular plate 1313 and the central plate 1311 on two sides of the annular region of the first annular plate 1312 are each in contact with the weak region 211 (the central plate 1311 is in contact with the weak region 211 through the first protrusion 133), and the first annular plate 1312 is suspended. When the battery cell 1 undergoes thermally runaway and the gas inside the housing 11 expands, under the action of the internal air pressure, the suspended first annular plate 1312 is more likely to deform and rupture, to allow the central plate 1311 to be separated and impact the weak region 211, so as to puncture the weak region 211, to allow the inside of the housing 11 to be in communication with the pressure relief passage 23.

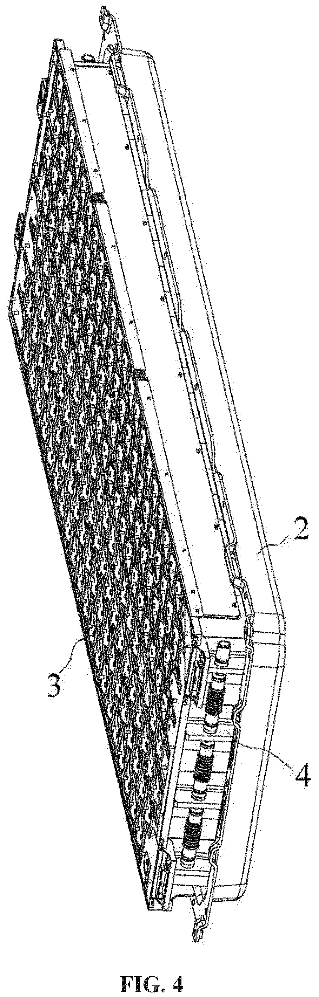

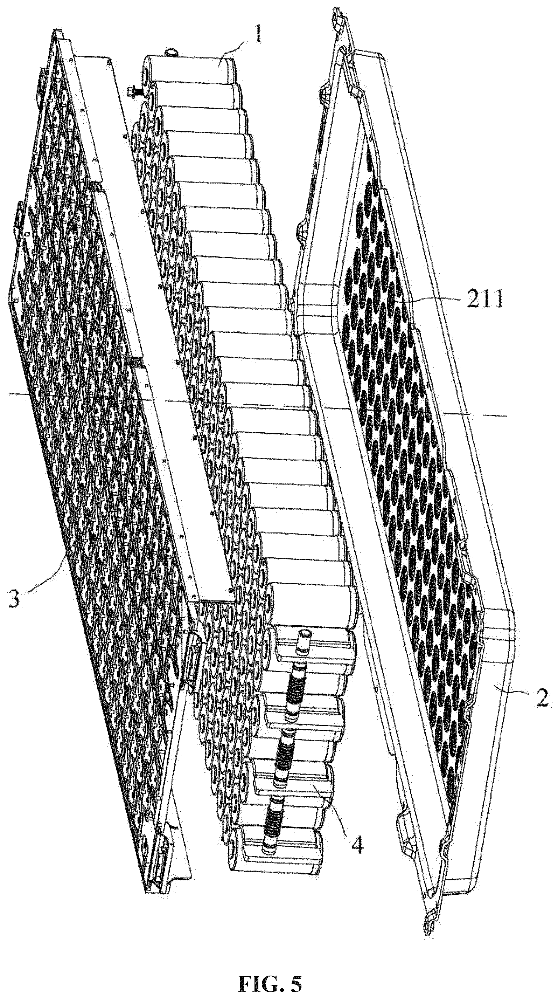

Referring to FIG. 4 and FIG. 5, a battery pack is further provided according to this embodiment, which includes a tray 2 and the battery cell 1. The pressure relief passage 23 is provided inside the tray 2, and a side wall of the pressure relief passage 23 has a weak region 211. The tray 2 is located below the battery cell 1 and supports the battery cell 1, and the protrusion 133 of the battery cell 1 is directly opposite to the weak region 211. When the battery cell 1 experiences thermal runaway, the blocking member 13 will melt and deform due to the heat, to allow the blocking member 13 to be separated from the housing 11 to release the pressure inside the battery cell 1. At this time, the blocking member 13 squeezes the weak region 211, and the protrusion 133 assists in breaking through the weak region 211, to allow the airflow ejected from the battery cell 1 to flow into the pressure relief passage 23 to improve the pressure relief effect and prevent the airflow ejected from the battery cell 1 from gathering inside the battery pack.

The tray 2 includes a partition plate 21 and a bottom plate 22, and the partition plate 21 and the bottom plate 22 are spaced apart to define the pressure relief passage 23 therebetween. The battery cell 1 is arranged on a side of the partition plate 21 away from the pressure relief passage 23, and the partition plate 21 is provided with the weak region 211. As shown in FIG. 4, multiple battery cells 1 are provided and are arranged in an array, and the protrusion 133 of the battery cell 1 directly faces the weak region 211 of the partition plate 21. Since the insulating blocking member 13 on the battery cell 1 can insulate the battery cell 1 from the conductive material sprayed in the thermal runaway state, the battery pack is not prone to short circuit in the thermal runaway state, nor is it prone to explosion due to short circuit, and its safety factor is high.

One of the blocking member 13 and the partition plate 21 of the battery cell 1 is provided with a second boss 135, the other is provided with a positioning slot 212, and the second boss 135 is inserted into the positioning slot 212. Through the insertion-connection between the second boss 135 and the positioning slot 212, the installation of the battery cell 1 onto the partition plate 21 is guided and limited, which reduces the installation difficulty of the battery cell 1 and the partition plate 21 and improves the assembly efficiency of the battery pack.

Referring to FIG. 1 to FIG. 3, in this embodiment, the second boss 135 is arranged on the blocking member 13, the second boss 135 is annular, the protrusion 133 is located within an annular region of the second boss 135, and the weak region 211 is provided with the positioning slot 212. The positioning slot 212 is arranged in the partition plate 21, and the positioning slot 212 is a through slot, that is, the positioning slot 212 passes through the partition plate 21. In other embodiments, the second boss 135 may also be arranged in the weak region 211 of the partition plate 21, and the blocking member 13 is correspondingly provided with the positioning slot 212.

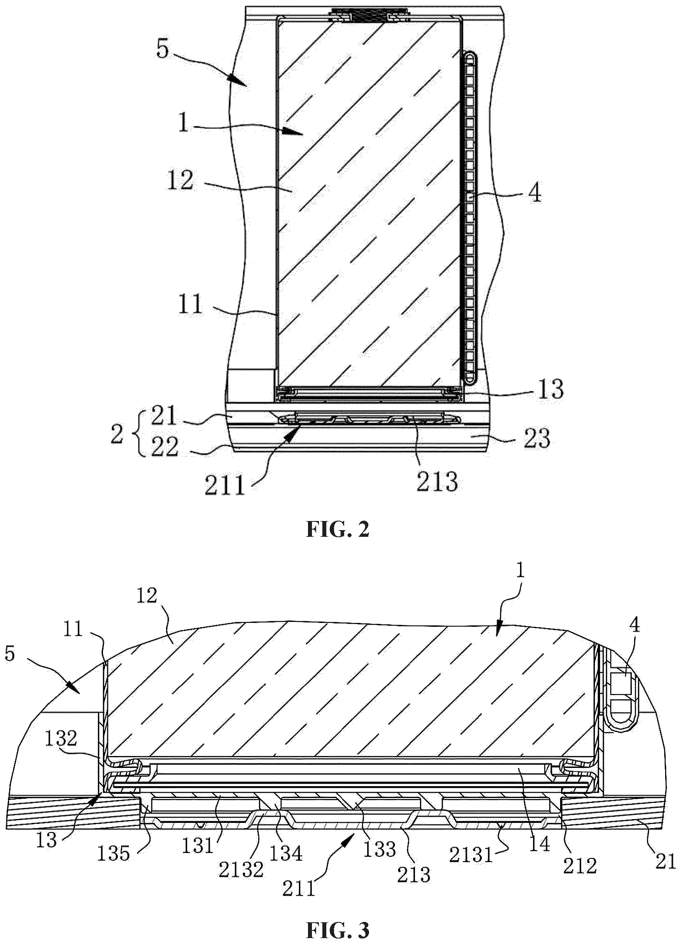

As shown in FIG. 3, an explosion-proof valve 213 is arranged in the positioning slot 212 to achieve the positioning installation of the explosion-proof valve 213. The explosion-proof valve 213 is arranged by being clamped within the positioning slot 212; or, the explosion-proof valve 213 is welded to the partition plate 21; or the explosion-proof valve 213 is bonded to the partition plate 21. By assembling a circumferential side of the explosion-proof valve 213 with a slot wall of the positioning slot 212 by clamping, welding or bonding, the stability of installation of the explosion-proof valve 213 is improved.

In this embodiment, the explosion-proof valve 213 is arranged in the weak region 211, and the protrusion 133 is directly opposite to the explosion-proof valve 213. When the battery cell 1 undergoes thermally runaway, the gas expanded in the battery cell 1 and the protrusion 133 and the first boss 134 on the battery cell 1 can break through the explosion-proof valve 213. This embodiment is equivalent to transferring the original explosion-proof valve 213 on the battery cell 1 to the tray 2 of the battery pack. By transferring the explosion-proof valve 213 from the battery cell 1 to the tray 2, in one aspect, the difficulty of assembling the battery cell 1 can be reduced to avoid accidental squeezing of the explosion-proof valve 213 during assembly, and in another aspect, the difficulty of fixing and installing the explosion-proof valve 213 can be reduced. It can be understood that the structure of the battery cell 1 is much more complicated than the tray 2. When setting the explosion-proof valve 213 on the tray 2, there is no need to consider the influence of the jelly roll 12, the collector and other structures on the installation position of the explosion-proof valve 213, and only the arrangement position of the explosion-proof valve 213 on the tray 2 is required to be considered, which reduces the difficulty of processing the battery pack.

In this embodiment, the depth of the positioning slot 212 is greater than the thickness of the explosion-proof valve 213, so as to achieve the spacing arrangement of the explosion-proof valve 213 and the blocking member 13. The separated explosion-proof valve 213 and tray 2 reduce the processing difficulty of the battery pack, thereby reducing the production cost of the battery pack. The depth of the positioning slot 212 is greater than the thickness of the explosion-proof valve 213, thus, the explosion-proof valve 213 can be arranged at an end of the positioning slot 212 away from the battery cell 1 to achieve the spacing arrangement of the explosion-proof valve 213 and the battery cell 1, and it can also ensure that the explosion-proof valve 213 is completely located within the positioning slot 212.

The diameter of the positioning slot 212 is smaller than the diameter of the sealing cover plate 131, and an edge of the sealing cover plate 131 abuts against the tray 2. When the battery cell 1 has thermal runaway, the central region of the sealing cover plate 131 ruptures. Since the diameter of the positioning slot 212 is smaller than the diameter of the sealing cover plate 131, the explosion-proof valve 213 is prevented from directly providing support force for the battery cell 1, thereby preventing the explosion-proof valve 213 from being damaged under the squeeze of other external forces. In this embodiment, since the edge of the sealing cover plate 131 abuts against the tray 2, the central region of the sealing cover plate 131 is in a suspended state. When the battery cell 1 experiences thermal runaway, the central region of the suspended sealing cover plate 131 is more likely to deform. Under the continuous action of the expanding gas, the central region of the sealing cover plate 131 will be damaged, thereby releasing the pressure inside the battery cell 1. It can be understood that the ejected gas is radial, and the ejected gas will spread around the center of the sealing cover plate 131. By setting the central region of the sealing cover plate 131 in a suspended state, the cracks of the sealing cover plate 131 are concentrated in its central region, which can ensure that the main path direction of the ejected gas is toward the explosion-proof valve 213, so that the ejected gas can smoothly enter the pressure relief passage 23 to complete the pressure relief.

The protrusion 133 is arranged to be spaced apart from the weak region 211. When in use, the battery pack will shake with the environment, and at this time, the battery cell 1 will also move accordingly. Since the protrusion 133 is spike-shaped, it is easier for the protrusion 133 to puncture the weak region 211 than the first boss 134. Therefore, the protrusion 133 is arranged to be spaced apart from the weak region 211 to avoid the protrusion 133 from puncturing the weak region 211 by mistake under normal circumstances. Arranging the protrusion 133 to be spaced apart from the weak region 211 may further provide processing allowance and assembly allowance for the production of the battery pack to avoid the battery cell 1 from puncturing the weak region 211 during the assembly process, thereby improving the yield rate of the battery.

In this embodiment, the explosion-proof valve 213 is provided with a notch 2131. When the explosion-proof valve 213 is under pressure, the notch 2131 is broken and deformed by being squeezed, so that the first accommodating chamber comes into airflow communication with the pressure relief passage 23 in the battery cell 1.

The explosion-proof valve 213 is further provided with a stamped third boss 2132 which is annular and abuts against the first boss 134. The third boss 2132 can reduce the thickness of the first boss 134, to allow an end surface of the first boss 134 to be flush with the protrusion 133, thereby reducing the difficulty of processing the blocking member 13. In the case where the end surface of the first boss 134 is flush with the protrusion 133, the third boss 2132 can also separate the protrusion 133 and the explosion-proof valve 213, so as to prevent the protrusion 133 from accidentally puncturing the explosion-proof valve 213 in normal use.

In this embodiment, as shown in FIG. 4, the battery pack further includes a cell connection system (CCS) assembly 3, a second accommodating chamber 5 is formed between the CCS assembly 3 and the partition plate 21, the battery cells 1 are arranged in array in the second accommodating chamber 5, and the collector plate of the CCS assembly 3 is electrically connected to the battery cells 1 to output after collecting the currents of the battery cells 1.

As shown in FIG. 5, a cooling pipe 4 is further provided in the battery pack, and the cooling pipe 4 is provided between two adjacent columns of battery cells 1, and is arranged to cool the battery cells 1. The first accommodating chamber of the housing 11 of the battery cell 1 is provided with not only a jelly roll 12 but also a collector plate 14, and the collector plate 14 is connected to each of the jelly roll 12 and the housing 11 to make the housing 11 negatively charged.

## Claims

1. A battery cell, comprising:
a housing, wherein the housing has a first accommodating chamber with an opening at one end; and
a blocking member, wherein the blocking member is an insulating member deformable at high temperature, the blocking member is connected to the housing and blocks the opening, the blocking member is provided with a protrusion on a side of the blocking member away from the housing, and the protrusion is arranged to break through a weak region on a pressure relief passage.

2. The battery cell according to claim 1, wherein the protrusion is spike-shaped; the protrusion is located at a center of the blocking member; or the protrusion is spike-shaped and located at the center of the blocking member.

3. The battery cell according to claim 1, wherein the blocking member is provided with a first boss on a side of the blocking member away from the housing, the first boss is annular, the protrusion is located in an annular region of the first boss, and an end face of the first boss abuts against the weak region.

4. The battery cell according to claim 3, wherein the blocking member comprises a sealing cover plate, the sealing cover plate comprises a central plate, a first annular plate and a second annular plate, the central plate is located within an annular region of the first annular plate, a circumferential side surface of the central plate is connected to an inner side surface of the first annular plate, the first annular plate is located within an annular region of the second annular plate, an outer circumferential side surface of the first annular plate is connected to an inner side surface of the second annular plate, the first boss and the protrusion are both arranged on the central plate, the second annular plate abuts against the weak region, the first annular plate is spaced from the weak region, and the first annular plate is arranged to break and the central plate is arranged to move toward the pressure relief passage in the event of thermal runaway of the battery cell.

5. The battery cell according to any one of claims 1 to 4, wherein the protrusion is made of a same material as the blocking member; or
the protrusion is made of a different material from the blocking member, and a melting point of the protrusion is higher than a melting point of the blocking member.

6. The battery cell according to any one of claims 1 to 4, wherein the blocking member comprises a sealing cover plate and a surrounding wall, the surrounding wall and the protrusion are located on two sides of the sealing cover plate respectively, and the surrounding wall is sleeved on an outer circumference of the housing.

7. A battery pack, comprising:
a tray and the battery cell according to any one of claims 1 to 6,
wherein a pressure relief passage is provided inside the tray, a side wall of the pressure relief passage has a weak region, the tray is located below the battery cell and supports the battery cell, and the protrusion of the battery cell is directly opposite to the weak region.

8. The battery pack according to claim 7, wherein the tray comprises a bottom plate and a partition plate, the bottom plate and the partition plate are spaced to define the pressure relief passage, the battery cell is arranged on a side of the partition plate away from the pressure relief passage, and the partition plate is provided with the weak region.

9. The battery pack according to claim 8, wherein one of the blocking member of the battery cell and the partition plate is provided with a second boss, and an other of the blocking member of the battery cell and the partition plate is provided with a positioning slot, and the second boss is inserted into the positioning slot.

10. The battery pack according to claim 9, wherein the second boss is arranged on the blocking member, the second boss is annular, and the protrusion is located within an annular region of the second boss; and the weak region is provided with the positioning slot.

11. The battery pack according to claim 10, further comprising an explosion-proof valve, wherein the explosion-proof valve is arranged by being clamped in the positioning slot; the explosion-proof valve is welded to the partition plate; or the explosion-proof valve is bonded to the partition plate; and
the protrusion is directly opposite to the explosion-proof valve.

12. The battery pack according to claim 11, wherein a depth of the positioning slot is greater than a thickness of the explosion-proof valve.

13. The battery pack according to claim 7, wherein the protrusion is arranged to be spaced apart from the weak region.
